(19) Europäisches Patentamt
European Patent Office
Office européen des brevets

(11) Publication number: 0 322 984 A2

# (12) EUROPEAN PATENT APPLICATION

(21) Application number: 88203022.4

(22) Date of filing: 27.12.88

(51) Int. Cl.4: C23C 22/28 , C09D 5/08

(30) Priority: 28.12.87 JP 332694/87

(43) Date of publication of application: 05.07.89 Bulletin 89/27

(84) Designated Contracting States: DE FR GB

(71) Applicant: Nippon Paint Co., Ltd.
1-2 Ohyodo-Kita 2-chome Ohyodo-ku
Osaka-shi Osaka(JP)

(72) Inventor: Sobata, Tamotsu
2-21-108, Takeshirodai 1-chome
Sakai-shi Osaka-fu(JP)
Inventor: Ushio, Akira
45-5, Higashifunabashi 2-chome
Hirakata-shi Osaka-fu(JP)

(74) Representative: Smulders, Theodorus A.H.J., Ir. et al
Vereenigde Octrooibureaux Nieuwe Parklaan 107
NL-2587 BP 's-Gravenhage(NL)

## (54) Coating type, chromate conversion coating composition.

(57) A coating type chromate conversion coating composition comprising as essential components (A) 5~500g/l as solid of an aqueous emulsion of polymer particles having an average grain diameter of 0.1~3μm which are crosslinked or whose glasstransition point is within a range of 15°~110° C, the said polymer being prepared by an emulsion polymerization of at least oneα,β-ethylenically unsaturated monomer in the presence of particular protective colloid defined in the specification, (B) 2~250g/l as solid of a polyacrylic acid or acrylic copolymer, (C) 5~500g/l as Cr of a water soluble chromium compound, 30~50 wt% of the total chromium contained being trivalent chromium, and (D) 5~1,000g/l of metal oxide microparticles having an average diameter of 0.1 to 20μm, selected from MnO, $TiO_2$ $Fe_2O_3$, $Fe_3O_4$, $CrO_3$, $Al_2O_3$, ZnO, $PbO_2$ and CuO, the solid weight ratio of (A) to (C) being 10:1 to 1:5, the weight ratio of (D) to (C) being 5:1 to 1:10 and pH of the composition being 1~3. The present coating composition isspecifically useful for the pre-treatment of metal substrate for coating, giving excellent corrosion-resistance and coating adhesive properties etc.

EP 0 322 984 A2

# Coating type, chromate conversion coating composition

## Field of the invention

The present invention relates to an improved coating type, chromate conversion coating composition to be used in the pretreatment of metal substrates for coating.

## Background of the invention

For the purpose of improving corrosion-resistant and coating adhesive properties, various chemical conversion treatments have be carried out for metal substrates as steel sheet, galvanized steel sheet, aluminium plate or the like. Among them, a particular attention has been directed to the technique wherein a metal surface is merely treated with the so-called coating-type, non-rinse chromate treating composition comprising an aqueous resin and a water soluble chromium compound, and various chromate treating compositions and application methods have been offered, as, for example, in Japanese Patent publication (unexamined) 57931/75; Japanese Patent publication Nos. 31026/74, 40865/74, 1889/75 and the like.
In these treating compositions, a vexed question always being at issue was the presence of surfactant and emulsifier used in an emulsion polymerization system. That is, for the stability of emulsion itself, it is essential to use a nonionic or anionic surfactant and however, the presence of such surfactant in the emulsion do naturally cause troublesome question such that when the metal surface's treated with a chromate conversion coating composition based on such emulsion and then applied with a coating, there are significant baneful influence on the adhesion, corrosion-resistance and humidity resistance of the coating. Therefore, studies have been concentrated on the subject of having a stable emulsion without using a surfactance in the emulsion polymerization step and geting a stable composition comprising the said emulsion and chromium compound, and as the result, has been established a technique of using a water soluble, organic high molecular compound as an emulsifier in the emulsion polymerization step. That is, in Japanese Patent publication (unexamined) No. 74934/76, in provided a composition comprising hexavalent chromium compound and an emulsion prepared by effecting polymerization of $\alpha,\beta$-ethylenically unsaturated monomers in the presence of particular amounts of specific polyacrylic acid or its ammonium salt and water soluble persulfate at a specified temperature, and in Japanese Patent publication No. 39393/81, a treating composition comprising an emulsion prepared by effecting emulsion polymerization of $\alpha,\beta$-ethylenically unsaturated monomers using a particular amount of polyacrylic acid and/or acrylic copolymer as an emulsifier, a water soluble chromium compound and a water soluble white carbon.
The emulsions disclosed in these publications are chemically stable, giving stable compositions when compounded with chromium compound, which are useful as chemical conversion treating compositions capable of resulting coatings with excellent corrosion-resistant and coating adhesive properties.
However, in considering surface pre-treatment of a metal substrate, it is of great importance to take into account, not only the stationary adhesion between the metal substrate and the composition, but also the coating adhesion under bending and processing conditions, and the scratch resistance of the coating. Generally speaking, coating adhesion under bending and scratch resistance are mutually conflicting properties.
In the abovementioned Japanese Patent publication (unexamined) No. 74934/76, particular attention has been only directed to the coating adhesion under bending and no regard is paid to the scratch resistance of the coating and in the abovementioned Japanese Patent publication No. 39393/81, there is a divergence of valuation of synergism in regard to scratch resistance and bending resistance, of the combination of said emulsion, water soluble chromium compound and water soluble white carbon, and it does not necessarily follow that good results are always obtained therewith.
There still remains an unsolved question of poor bending resistance at a lower temperature and poor storage stability of concentrated composition with a higher trivalent chromium content.

To cope with the same, the present inventors have previously offered an anticorrosive metal surface pretreating composition comprising an emulsion of polymer particles and a water soluble chromium compound, said particles being prepared by the emulsion polymerization of $\alpha,\beta$-ethylenically unsaturated monomers in the presence of an emulsifier selected from the group consisting of a polyacrylic acid and a

copolymer of acrylic acid and a member selected from methacrylic acid, an acrylamide, a methacrylamide and a hydrophillic monomer of the formula;

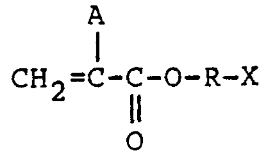

wherein A is hydrogen atom or methyl; R is a substituted or unsubstituted alkylene having 2 to 4 carbon atoms; and X is a functional group containing at least one of oxygen atom, phosphorus atom and sulfur atom, and formed as hard particles through internal gelation (or crosslinking) by the use of, as a part of said α,β-ethylenically unsaturated monomers, such monomer as having two or more ethylenic unsaturations, or having a glasstransition point of 15° to 110° C by the selection of employed monomers, the amount of said emulsifier being 5 to 100 parts by weight per 100 parts by weight of α,β-ethylenically unsaturated monomers to be polymerized, said water soluble chromium compound containing trivalent chromium in an amount corresponding to 30 to 50% by weight of the total chromium, and the weight ratio of emulsion solid to metallic chromium being 2:1 to 5:1. (Japanese Patent publication (unexamined) No. 213064/83)).

In that composition, particular, hard polymer microparticles are contained and therefore, when applied on metal surface, they are fallen in microcavities on the surface and anchored thereto, and scratch resistance can be improved by stress-relaxation around the microparticles without sacrificing excellent coating adhesion under bending.

However, even with the abovementioned treating composition, it is still impossible to bring both of the conflicting properties of coating adhesion under bending and scratch resistance of the coating to each ideal level of zinc phosphate coating or more. Furthermore, careless modification of such composition will surely cause deterioration in stability of that system. Therefore, a further development has been demanded in the so-called coating type chromate conversion coating composition.

It is, therefore, an object of the present invention to provide a coating type, non-rinse chromate conversion coating composition which is chemically stable and can result a coating being excellent in corrosion resistance, water resistance and coating adhesion, and having far improved scratch resistance and coating adhesion under bending comparable with those of zinc phosphate coating.

## Summary of the invention

According to the invention, the aforesaid object can be advantageously attained with a coating type chromate conversion coating composition comprising as essential components,

(A) from 5 to 500g/l as solid of an aqueous emulsion of crosslinked polymer particles or particles of polymer having a glasstransition point of 15° to 110° C whose average diameter is 0.1 to 3µm, prepared by an emulsion polymerization of at least one α,β-ethylenically unsaturated monomer in the presence of at least one protective colloid selected from the group consisting of

(i) a polyacrylic acid having a number average molecular weight of 5,000 to 300,000,

(ii) an acrylic copolymer of acrylic acid and at least one other monomer selected from methacrylic acid, acrylamides, methacrylamides, and hydrophilic monomer represented by the formula:

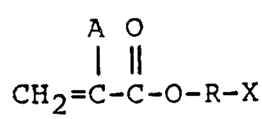

(in which A is hydrogen atom or methyl group; R is substituted or unsubstituted $C_2$~$C_4$ alkylene; X is a functional group bearing at least one of oxygen, phosphor and sulfur atoms), number average molecular weight of said copolymer being 5,000~300,000 and

(iii) an oligomer derived from at least one $\alpha,\beta$-ethylenically unsaturated monomer, which bears hydrophilic groups and have a number average molecular weight of 500~10,000, the weight ratio of said $\alpha,\beta$-ethylenically unsaturated monomer used in the emulsion polymerization to said protective colloid being 100:5~100 as solid,

(B) from 2 to 250g/l as solid of a polyacrylic acid having a number average molecular weight of 5,000 to 300,000 and/or an acrylic copolymer of acrylic acid and at least one other monomer selected from methacrylic acid, acrylamides, methacrylamides and hydrophilic monomer represented by the formula:

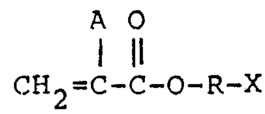

in which A, R and X are as defined above, having a number average molecular weight of 5,000 to 300,000, indlusive of the amount of polyacrylic acid and/or acrylic copolymer used as protective colloid in the preparation of said polymer particles, if any,

(C) from 5 to 500g/l as Cr of a water soluble chromium compound, 30 to 50 wt% of the total chromium contained being trivalent chromium, and

(D) from 5 to 1,000g/l of metal oxide microparticles having an average diameter of 0.1 to 20$\mu$m, selected from the group consisting of MnO, $TiO_2$, $FeO_3$, $Fe_3O_4$, $Cr_2O_3$, $Al_2O_3$, ZnO, $PbO_2$ and Cuo, the solid weight ratio of said polymer particles emulsion (A) to water soluble chromium compound (C) being 10:1 to 1:5, the weight ratio of said metal oxide microparticles (D) to water soluble chromium compound (C) being 5:1 to 1:10 and pH of the composition being 1~3.

The aqueous emulsion of polymer particles (A) used in the present invention is prepared by the emulsion polymerization of common $\alpha,\beta$-ethylenically unsaturated monomers in the presence of particular amounts of particular water soluble polymer used as a protective colloid. The abovementioned water soluble polymer may be either one of the following;

(i) a polyacrylic acid having a number average molecular weight of 5,000~300,000,

(ii) a acrylic copolymer of acrylic acid and at least one other monomer selected from the group consisting of methacrylic acid, an acrylamide (e.g. acrylamide, N-methylol acrylamide), a methacrylamide (e.g. methacrylamide, N-methylol methacrylamide) and a hydrophilic monomer of the formula;

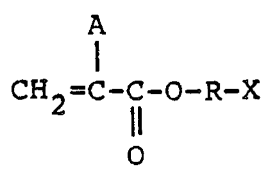

wherein A is hydrogen atom or methyl group; R is a substituted or unsubstituted alkylene group having 2 to 4 carbon atoms and X is a functional group having at least one of oxygen atom, phosphorus atom and sulfur atom, (e.g. 2-hydroxyethyl acrylate, hydroxy propyl acrylate, 2-hydroxyethyl methacrylate, hydroxypropyl methacrylate, 3-hydroxybutyl acrylate, 2,2-bis (hydroxymethyl) ethyl acrylate, 2,3-dihydroxy propyl methacrylate, 3-hydroxy butyl methacrylate as monomers wherein X is a functional group having oxygen atom; (a) mono (2-hydroxyethyl methacrylate) acid phosphate of the formula;

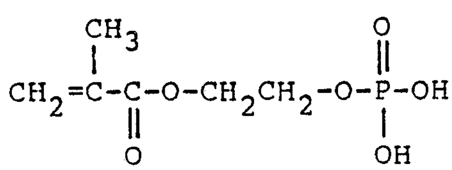

and (b) mono (3-chloro-2-hydroxypropyl methacrylate) acid phosphate of the formula;

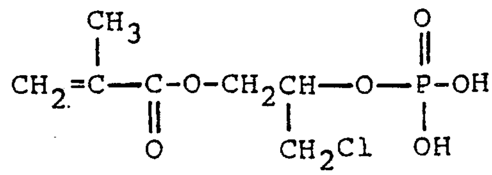

as monomers wherein X is a functional group having phosphorus atom; and sulfonyl ethyl methacrylate as monomers wherein X is a functional group having sulfur atom), having a number average molecular weight of 5,000 to 300,000 preferably from 10,000 to 100,000.

In the abovementioned copolymer (ii), the proportion of the acrylic acid to the other hydrophilic monomers may be advantageously selected so as to bring the acrylic acid content in the whole monomers to 50% by weight or more, preferably 60% by weight or more, from due consideration of stability of the emulsion, adhesion to the metal substrate and the like.

Preparation of such water-soluble polymers may be carried out in a conventional way. (e.g. polymerization in an aqueous solution, block polymerization, polymerization in an organic solvent, etc.). For instance, in case of the polymerization in an aqueous solution, the polymerization may be carried out by adding dropwise an acrylic acid or a mixture of acrylic acid and at least one of other hydrophilic monomers and an aqueous solution of water-soluble free radical catalyst other than an alkali metal salt (e.g. ammonium persulfate and 2,2-azobis- (2-aminodipropane) hydrochloride) from the separate dropping funnels to water (preferably a deionized water) which is kept at a temperature suitable for the reaction, : and reacting the mixture with agitation at a temperature of 70° to 90° C. The reaction time including dropping time is usually 3 to 5 hours. Thus obtained water soluble polymers generally have a number average molecular weight of 5,000 to 300,000.

In place of using the abovementioned water soluble polymer, the emulsion polymerization of α,β-ethylenically unsaturated monomers may be advatageously carried out in the presence of an oligomer (iii) with hydrophilic groups comprising at least one α,β-ethylenically unsaturated monomer (molecular weight, from about 500 to about 10,000). At the time when such an oligomer is used as a protective colloid in an aqueous emulsion polymerization system, the oligomer is present in an aqueous medium as minute droplet wherein the hydrophilic groups are oriented outwardly and oleophilic portion inwardly, and the monomers are taken into the said oleophilic portion and polymerized on that spot. Consequently, at the outer portion of thus formed polymer particle, there are always oligomer whose hydrophilic groups are oriented outwardly. Thus, the oligomer can fulfil the function of surface active agent. The details of emulsion polymerization of α,β-ethylenically unsaturated monomers using such oligomer as protective colloid and preparation of such oligomer are shown in Japanese Patent publication (unexamined) No. 197575/84.

Examples of α,β-ethylenically unsaturated monomers to be polymerized by emulsion polymerization in the presence of at least one protective colloid selected from a polyacrylic acid, an acrylic copolymer and an oligomer according to the present invention are acrylic esters (e.g. methyl acrylate, ethyl acrylate, isopropyl acrylate, n-butyl acrylate, 2-ethylhexyl acrylate, decyl acrylate isooctyl acrylate, 2-ethylbutyl acrylate, octyl acrylate, methoxyethyl acrylate, ethoxyethyl acrylate, 3-ethoxypropyl acrylate, etc.); methacrylic esters (e.g. methyl methacrylate, ethyl methacrylate, isopropyl methacrylate n-butyl methacrylate, isobutyl methacrylate, n-hexyl methacrylate, lauryl methacrylate, decyl methacrylate, octyl methacrylate, stearyl methacrylate, 2-methylhexyl methacrylate, glycidyl methacrylate, 2-ethoxyethyl methacrylate, cetyl methacrylate, benzyl methacrylate, 3-methoxybutyl methacrylate, etc.); acrylonitrile; methacrylonitrile; vinyl acetate; vinyl chloride; vinyl ketone; vinyl-toluene; and styrene, which may be used alone or in a mixture of two or more thereof. In addition to these monomers, there may also be used a small amount of the monomers which are previously mentioned in connection with the water-soluble polymer, such as acrylic acid, methacrylic acid, acrylamides, methacrylamides and the hydrophilic monomers of the above formula (I). Particularly, when a hydroxy group-containing monomer (e.g. 2-hydroxyethyl methacrylate) is used, the formed polymer will react with the emulsifier having COOH group, thereby forming crosslinked product, and therefore, the formed coating can afford an extremely improved adhesion to the metal substrare.

Emulsion-polymerization of the α,β-monoethylenically unsaturated monomers can be carried out by using a conventional emulsion-polymerization method. However, at that time, the abovementioned specific water-soluble polymer must be used as the emulsifier and the catalyst must be a water-soluble catalyst containing substantially no alkali metal ion (which will give a bad influence on coating film as decrease in corrosion resistance and moisture resistance thereof). For instance, the emulsion-polymerization may be carried out by adding dropwise simultaneously the α,β-monoethylenically unsaturated monomer and

aqueous (preferably a deionized water) solution of an alkali metal-free water-soluble catalyst (e.g. ammonium persulfate) and optionally a part of the emulsifier from the separate dropping funnels to water (preferably a deionized water) containing all or remaining part of the emulsifier which is kept at a temperature suitable for the reaction, and then reacting with agitation the mixture at a temperature of 50° to 70° C., preferably 55° to 65° C. The reaction time including dropping time is usually 3 to 7 hours. The emulsifier is used in an amount of 5 to 100 parts by weight, preferably 20 to 50 parts by weight, in the solid content to 100 parts by weight of the $\alpha,\beta$-monoethylenically unsaturated monomer. When the amount of the emulsifier is less than 5 parts by weight, the emulsion has an inferior storage stability and hence cannot be used. Whereas, the use of emulsifier in excess of 100 parts by weight can not specifically provide any further improvements in storage stability of the emulsion and chemical stability to water-soluble chromium compounds but rather produce such problems as undesired foaming of emulsion.

By the adoption of such emulsion-polymerization, a uniform, stable emulsion having about 30% by weight of solid content can be obtained. When the emulsion is incorporated into the treating liquid, an epoxy resin such as a bisphenol type epoxy resin (e.g. Epicoat 828 and Epicoat 1001, trade name of Shell Chemical) may optionally be used together as a hardening agent. The epoxy resin may also be incorporated into the emulsion by dissolving it in the $\alpha,\beta$ -monoethylenically unsaturated monomers to be polymerized. The use of such epoxy resin can afford a coating with further improved paint adhesion properties.

In order to improve bending properties and scratch resistance of the coating, the aqueous emulsion should contain hard polymer microparticles having an average grain diameter of 0.1~3$\mu$, which are prepared by the similar emulsion polymerization as stated in the preceeding paragraph, excepting using as a part of $\alpha,\beta$-ethylenically unsaturated monomers, a polyfunctional monomer having 2 or more radically polymerizable, ethylenic unsaturation bonds, thereby causing internal gelation of the polymer particles or selecting monomers so as to give hard particles of polymer having a glass transition point of 15° to 110° C. As the polyfunctional monomers, preference is given to esters of unsaturated monocarboxylic acids with polyhydric alcohols, esters of polycarboxylic acids with unsaturated alcohols and aromatic compounds substituted with two or more vinyl groups. Typical examples are ethylene glycol diacrylate, ethyleneglycol dimethacrylate, triethylene glycol dimethacrylate, tetraethylene glycol dimethacrylate, 1,3-butylene glycol dimethacrylate, trimethylol propane triacrylate, trimethylol propane trimethacrylate, 1,4-butanediol diacrylate, neopentyl glycol diacrylate, 1,6-hexanediol diacrylate, pentaerythritol diacrylate, pentaerythritol triacrylate, pentaerythritol tetraacrylate, pentaerythritol dimethacrylate, pentaerythritol trimethacrylate, pentaerythritol tetramethacrylate, glycerol dimethacrylate, glycerol diacrylate, glycerol allyloxy dimethacrylate, 1,1,1-trishydroxymethylethane diacrylate, 1,1,1-trishydroxymethylethane triacrylate, 1,1,1-trishydroxymethylethane dimethacrylate, 1,1,1-trishydroxymethylethane trimethacrylate, 1,1,1-trishydroxymethylpropane diacrylate, 1,1,1-trishydroxymethylpropane triacrylate, 1,1,1-trishydroxymethylpropane dimethacrylate, 1,1,1-trishydroxymethylpropane trimethacrylate, triallyl cyanurate, triallyl isocyanurate, triallyl trimellitate, diallyl terephthalate, diallyl phthalate and divinyl benzene. The amount of polyfunctional monomer may be varied in a wider range, providing giving sufficient internal gelation of the formed polymer, and however, it is usually in a range of 0.01 to 20%, preferably 0.1 to 10%, by weight, of the total monomers.
The emulsion of hard polymer microparticles having a glass transition point (Tg-value) from 15° to 110° C is likewise useful as an aqueous resin binder component in this invention. Since Tg value of a given polymer may be easily estimated and calculated from the kinds and amounts of the monomers to be polymerized, it is within common knowledge in the art to select appropriated members from the known $\alpha,\beta$ -ethylenically unsaturated monomers for this end.

The second component (B) in the present conversion coating composition is the same water soluble polymer as already stated as a protective colloid in the preparation of polymer particles emulsion (A). That is, the polymer may be a polyacrylic acid having a number average molecular weight of 5,000 to 300,000 and/or an acrylic copolymer of acrylic acid and at least one other monomer selected from methacrylic acid, acrylamides, methacrylamides and hydrophilic monomer represented by the formula

$$CH_2=\overset{\overset{\displaystyle A}{|}}{C}-\overset{\overset{\displaystyle O}{\|}}{C}-O-R-X$$

in which A is hydrogen atom or methyl group; R is a substituted or unsubstituted alkylene having 2 to 4 carbon atoms; X is a functional group bearing at least one of oxygen atom, phosphorus atom and sulfur atom, having a number average molecular weight of 5,000 to 300,000.

The water soluble chromium compound (C) used in the present invention may include any conventional chromium compounds, but chromates are to be excluded because the aqueous composition should be free from such metallic ions as alkali metal ions and anionic ions which are harmful to an anticorrosive coating. From this point of view, the most suitable chromium compound is chromic anhydride ($Cr_3O$). It is important in the present invention that said chromium compound should contain 30 to 50% by weight, preferably 35 to 45% by weight, of trivalent chromium based on the total chromium content. Therefore, the abovesaid chromium compound may advantageously be subjected to a partial reduction with formalin, hydrogen peroxide or the like to fulfil the abovementioned condition. If the trivalent chromium content exceeds over 50% by weight of the total chromium, there is a tendency that the corrosion resistance of the coated plate is lowered and processing characteristics are deteriorated. On the other hand, if the trivalent chromium content is less than 30% by weight, the chromium compound tends to effuse out from the coating film, resulting the lowering in corrosion resistance and moisture resistance of the coating. Bending properties and scratch resistance are also decreased in that case, which are not desired.

The metal oxide microparticles (D) used in the present invention (hereafter referred to as hard microparticles) should have an average diameter of 0.1 to 20μm and are made of MnO, $TiO_2$, $Fe_2O_3$, $Fe_3O_4$, $Cr_2O_3$, $Al_2O_3$, ZnO, $PbO_2$ and CuO. The isoelectric points of these materials are in a range of 4 to 10.

Thus, the employable hard microparticles are characterized by the abovesaid diameter and the isoelectric point, and therefore, though less desirable, other materials may be used as hard microparticles providing fulfiling the abovesaid requirements.

If the isoelectric point of metal oxide is less than 4, there is a tendency that bending processability of the coated plate is lowered and if it is more than 10, there is a tendency that scratch resistance of the coating and chemical stability are lowered. It is, however, pointed that other hard microparticles having an isoelectric point outside the abovesaid range may be added to the present treating composition, if desired, to the extent that no adverse effects are produced therewith. The hard microparticles need not be made of the abovementioned metal oxide only. The microparticles may be made of other material and covered with either metal oxide mentioned above.

The average diameter of the hard microparticles must be limited in a range of 0.1 to 20μm. This is because, if the diameter is less than 0.1μm, there is a marked decrease in coin scratch resistance of the coating and if it is over 20μm, bending processability is lowered.

The present coating type, chromate conversion coating composition is characterized by comprising as essential components, the abovementioned aqueous emulsion of polymer particles (A), acrylic copolymer (B), water soluble chromium compound (C) and hard microparticles (D).

The aqueous emulsion of polymer particles (A) is present in the present conversion coating composition in a solid content of 5 to 500g/l. If the said solid content is less than 5g/l, there are decrease in bending processability and scratch resistance of the coating and if it is more than 500g/l, there is a clear decrease in chemical stability of the composition.

The acrylic copolymer (B) is present in the composition in an amount of 2 to 250g/l as solid. This, however, is defined as being inclusive of the amount of polyacrylic acid and/or acrylic copolymer used as protective colloid in the preparation of said emulsion of polymer particles (A), if any. Therefore, when an amount of such acrylic copolymer are, in fact, used in the preparation of said aqueous emulsion (A), there are cases the additional amounts of acrylic copolymer (B) are to be added to the composition and cases no additional acrylic copolymer (B) are required. When the amount of said acrylic copolymer (B) in the composition is less than 2g/l, there are decrease in bending processabilities and scratch resistance and when it is over 250g/l, chemical stability of the composition is lowered.

The water soluble chromium compound (C) is used in the form of its aqueous solution and its content in the composition should be in a range of 5~500g/l as metallic chromium. If the chromium content is less than 5g/l, there are decrease in corrosion resistance, humidity resistance and scratch resistance of the coating, and if it is over 500g/l, beinding processabilities are lowered.

The hard microparticles (D) are used after being dispersed in the abovementioned aqueous emulsion of polymer particles (A) or water. The content of said hard microparticles (D) in the composition should be in a range of 5 to 1,000g/l. If the said content in the compositionis less than 5g/l, scratch resistance of the coating is lowered and if it is more than 1,000g/l, bending processabilities of the coated plate are lowered, which are not desired. The solid weight ratio of the aqueous emulsion of polymer particles (A) to partially reduced chromic acid should be settled in a range of 10:1 to 1:5. If the amount of water soluble chromium compound (C) is less than the abovesaid range, there are decrease in corrosion-resistance and scratch resistance of the coated plate, and if it is higher than the abovesaid range, then bending processabilities are lowered. The compounding ratio of said hard microparticles (D) to water soluble chromium compound (C) is

fixed in a range of 5:1~1:10 in solid weight ratio. This is because, if the weight ratio of hard microparticles (D) is lower than the abovesaid range, scratch resistance of the coated plate is lowered and if it exceeds over the abovesaid range, bending processabilities are lowered.

PH of the present coating composition must be in a range of 1 to 3, to obtain the desired bending processabilities and scratch resistance of the coated plate. For the control of pH of the coating composition, any of inorganic or organic acids may be used, as, for example, hydrochloric acid, phosphoric acid, nitric acid, chromic anhydride, formic acid, acetic acid, lactic acid and the like, and however, particular preference is given to phosphoric acid and chromic anhydride from the standview of resulting a far improved resistance of the coating. The present aqueous composition may further contain various other inorganic compounds which can release other inorganic ions than alkali metal ions, as $Zn^{2+}$, $Co^{2+}$, $Ni^{2+}$, $Fe^{2+}$, $Fe^{3+}$, $PO_4^{3-}$, $F^-$, $NO_3^-$, $BF_4^-$, $SiF_6^{2-}$ or the like, thereby forming a more uniform and adhesive coating on the metal substrate.

Thus formulated aqueous composition may form precipitates of hard microparticles (D) when stored at room temperature, but by a simple stirring means, the precipitates are easily re-dispersed. Therefore, there gives no significant problem in the actual production line in this respect.

The present aqueous composition may be applied on the surfaces of various metals (e.g. iron, stainless steel, galvanized steel, aluminium and the like) by conventional means as roll coating, mist spraying and dipping, and then subjected to drying to prepare the desired under coating. The coating weight is desirably determined in a range of 100mg to 10g/m$^2$, more preferably 500mg to 2g/m$^2$ on dry film basis, when the coating weight is outside the abovementioned range, there is a tendency that workabilities of the coated plate be lowered. In that coating weight range, the water soluble chromium compound content will come to the range of 10 to 1,000mg/m$^2$ on metallic chromium basis. More preferable chromium content is between 50 to 200mg/m$^2$. In a coil coating line for galvanized steel, iron, stainless steel or aluminium sheet, roll coating is the best coaing way, thereby resulting a this and uniform under coating on the metal surface without generation of any undesired floating of pigment or the like. Drying may be carried out under appropriate conditions which are effective for the evaporation of water contained in the coating. For example, in order to obtain an under coat of 500mg~1g/m$^2$ coating weight with the aqueous composition having a solid content of 20 to 50% by weight, drying may be carried out at 100°C for 30 to 60 seconds or 200°C for 7 to 8 seconds. Since the aqueous emulsion of polymer particles (A) and hence the treating aqueous composition of this invention is free from a conventional surfactant, the formed under coat is excellent in corrosion resistance and humidity resistance. Furthermore, adhesion toward coating to be placed thereon is excellent, too. Therefore, the present aqueous composition is very useful for the production of coated plates with excellent processabilities. Since the isoelectric point of said hard microparticles (D) is in a range of 4~10, said microparticles (D) show basicity in the treating composition of pH 1~3, and they are of hard nature. On the other hand, the acrylic copolymer (B) shows acidity because of the presence of particular amounts of polyacrylic acid or acrylic acid contained. Therefore, in the under coat, the abovementioned two are bonded together and far improved bending processability and scratch resistance are resulted therefrom. According to the invention, no particular device is required for the maintenance of the treating aqueous composition bath and therefore, continuous production of precoat metal can be done by merely supplementing intermittently the consumed amount of the same treating aqueous composition as used in the starting bath. Furthermore, since the rinsing and other after-treatment are not required, the processing steps are minimized and no specific apparatus is required for the treatment of waste water as is the case in a conventional metal pretreatment. Thus, the present aqueous composition is very useful for the chemical conversion of metal surfaces for coatings, as well as the conditioning of various metal surfaces.

The invention shall be now more fully explained in the following Examples. Unless otherwise being stated, all parts and percentages are by weight.

## Example 1

Preparation of emulsion (EM No. 1, emulsion of high Tg polymer particles)

Into a flask fitted with a stirrer, a reflux condenser, a thermometer and two dropping funnels, were placed 150 parts of deionized water and 120 parts of water soluble copolymer obtained by copolymerization of acrylic acid and 2-hydroxyethyl methacrylate in a weight ratio of 8.2 (25% aqueous solution, molecular weight Mw = 66,000) and the mixture was heated to 80°to 85°C under stirring. Then, a monomer mixture

consisting of 50 parts of methyl methacrylate, 30 parts of styrene, 10 parts of 2-hydroxyethyl methacrylate, and 10 parts of n-butyl methacrylate, and a catalyst solution consisting of 2 parts of ammonium persulfate and 50 parts of deionized water were separately and simultaneously added dropwise from the dropping funnels over a period of 3 hours. After completion of said addition, the resultant mixture was kept at 80° to 85°C for about 2 hours to complete polymerization reaction to given an aqueous acrylic emulsion (EM No. 1) having a solid content of 30.1% and a pH of 1.6. The average grain diameter of the particles contained was 0.2μ. Stability of thus obtained emulsion was excellent. Tg value of the solid was 89°C, 23% by weight of said solid being acrylic copolymer.

Example 2

Preparation of emulsion (EM No. 2, emulsion of crosslinked polymer particles)

The same procedures as stated in Example 1 were repeated excepting using a monomer mixture of 50 parts of methyl methacrylate, 27 parts of styrene, 10 parts of 2-hydroxyethyl methacrylate, 10 parts of n-butyl methacrylate and 3 parts of ethyleneglycol dimethacrylate. Thus obtained emulsion was a uniform and stable emulsion having a solid content of 30.0% and a pH of 1.6, the average grain diameter of the particles contained being 0.55μ . 23% by weight of said solid were acrylic copolymer, which were not soluble in xylene.

Example 3

Preparation of emulsion (EM No. 3, emulsion of polymer particles containing acrylonitrile as a constituent and having a high Tg value)

The same procedures as stated in Example 1 were repeated excepting using a monomer mixture of 50 parts of methyl methacrylate, 25 parts of styrene, 10 parts of 2-hydroxyethyl methacrylate, 10 parts of n-butyl methacrylate and 5 parts of acrylonitrile to obtain a uniform and stable emulsion having a solid content of 30.3% and a pH of 1.6, the average grain diameter of the particles contained being 0.2μ. Tg value of the solid was 80°C and 23% by weight of the solid was acrylic copolymer.

Example 4

Preparation of emulsion (EM No. 4 emulsion)

Into a similar flask as used in Example 1, were placed 100 parts of deionized water and 7 parts of Emulgen 950 (nonionic surfactant, trademark of Kao Atras K.K.), and the mixture was heated under stirring to 60°~65°C. To this, a monomer mixture consisting of 35 parts of methyl methacrylate, 15 parts of styrene, 10 parts of 2-hydroxymethyl methacrylate and 40 parts of n-butyl acrylate, and a catalyst solution consisting of 2 parts of ammonium persulfate and 20 parts of deionized water were separately and simultaneously added dropwise from the dropping funnels over a period of 3 hours. After completion of said addition, the resultant mixture was kept at 60° to 65°C for about 1 hour to obtain an emulsion having a solid content of 46.3%.

Example 5

(A) Preparation of aqueous treating composition

20 parts of the emulsion EM No. 1 obtained in Example 1 (solid content 30.1%, acrylic copolymer conversion 6.9%, average grain diameter 0.2μ, Tg 89°C), 40 parts of aqueous chromium compound

solution obtained by adding 37% aqueous formalin solution to 17% aqueous chromic anhydride solution, thereby reducing about 35% of hexavalent chromium to trivalent chromium (methallic chromium = 40x0.17x( $\frac{Cr}{CrO_3}$; factor 0.52)), 20 parts of Tiepak A-220 (anatase type titanium dioxide, average grain diameter 0.5μ, trademark of Ishihara Sangyo K.K.) and 20 parts of deionized water were mixed well under stirring at room temperature to have a concentrated treating composition. This was diluted with 3 times deionized water to obtain an aqueous treating composition.

(B) Surface treatment of metal plate and coating

The abovementioned aqueous treating composition was applied with a #7 bar coater to the surface of a galvanized steel sheet for heavy forming use (Zn coverage 90g/m$^2$, 0.5m/m thickness) previously degreased with an alkali degreasing agent (RIDOLINE No. 155, trade name of Nippon Paint Co.), washed with water and dried, so as to be the chromium coating weight of 100mg/m$^2$, and the coated plate was dried by forced hot air at 70°C to obtain a surface treated sheet with a uniform under coat. Thus surface-treated galvanized steel sheet was then coated with a base coat of Superlack DIF P-01 Primer (trade name of Nippon Paint Co., thermosetting type epoxyester resin base) to a dry film thickness of 3μ, baked at the temperature capable causing the maximum plate temperature of 204°C, for 50 seconds, coated with a top coat of Superlack DIF F-60 (trade name of Nippon Paint Co., thermosetting type polyester resin base, red rust color) to a dry film thickness of 11μ and baked at the temperature capable of causing the maximum plate temperature of 204°C, for 50 seconds.

Following Table 1 shows the composition of the used treating composition and test results with thus obtained coated plate.

Example 6

The same experiments as stated in Example 5 were repeated excepting substituting emulsion EM No. 2 for emulsion EM No. 1, and composition of aqueous treating composition used and test results with the coated plate were shown in Table 1.

Example 7

The same experiments as stated in Example 5 were repeated excepting substituting emulsion EM No. 3 for emulsion EM No. 1, and composition of aqueous treating composition used and test results with the coated plate were shown in Table 1.

Example 8

The same procedures as stated in Example 5 were repeated with 10 parts of emulsion EM No. 2 obtained in Example 2, 60 parts of aqueous chromium compound solution stated in Example 5, 20 parts of Alumina A-50-N (trade name of Showa Denko, aluminium micropowder, average diameter 1.2μ) and 10 parts of deionized water to obtain a concentrated treating composition, which was then diluted to obtain an aqueous treating composition.

The similar coated plate as stated in Example 5 was prepared following the procedures of Example 5, excepting revising the metal chromium coating weight to 150mg/m$^2$.

Composition of the aqueous treating composition and test results with the coated plate were shown in Table 1.

Example 9

The similar concentrated and diluted aqueous treating compositions as stated in Example 6 were prepared following the procedures of Example 6 but substituting iron oxide (CM25P, trade name of Nippon Bengara K.K., average grain diameter 0.3μ) for titanium dioxide.

The coated plate was prepared as in Example 6.

Composition of aqueous treating composition and test results with thus formed coated plate were shown in Table 1.

## Comparative Example 1

(A) Preparation of aqueous treating composition

15 parts of the emulsion EM No. 2 obtained in Example 2, and 45 parts of the aqueous chromium compound solution as used in Example 5 were added to a dispersion of 5 parts of Aerosil 200 (fine silicic anhydride particles, average grain diameter of 0.01μ, trademark of Nippon Aerosil Co.) in 35 parts of deionized water and the mixture was stirred well at room temperature to obtain a concentrated aqueous treating composition.
Thus obtained concentrate was diluted to 10 times volume with deionized water to obtain an aqueous treating composition.

(B) surface treatment of metal plate and coating

The abovementioned aqueous treating composition was applied to a galvanized steel sheet as in Example 5 so as to give a metallic chromium coating weight of 30mg/m$^2$ and thus surface treated sheet was coated as in Example 5. The composition of said aqueous treating composition and test reaults obtained with said coated plate were shown in Table 1.

## Comparative Example 2~4

The similar aqueous treating compositions and coated plates as in Example 5 were prepared, using the compositions shown in Table 1.
In Comparative Example 2, Crystalight 5X (natural silica, average grain diameter of 1.5μ, trade name of Tatsumori Co.) was used in place of titanium dioxide, in Comparative Example 3, 17% aqueous chromium anhydride solution (no reduction) was used as aqueous chromium compound solution and in Comparative Example 4, emulsion EM No. 4 obtained in Example 4 was used as emulsion.
Compositions of these treating compositions and test results with the coated plates are shown in Table 1.

## Comparative Example 5

To the same galvanized steel sheet previously degreased as used in Example 5, a commercially available, phosphating solution was applied by spraying for 2 minutes and immediately thereafter, the coated sheet was washed with a quantity of water.
Then, the sheet was dipped into an aqueous post-treating bath and dried at 100 °C for 1 minute, thereby forming a uniform coating having a coating weight of 1,500mg/m$^2$. Thus surface-treated plate was coated with a base coat, baked, coated with a top coat and baked as in Example 5 to obtain a coated plate for comparison sake.
The test results with this plate are also shown in Table 1.
Test methods and evaluation standards are as follows.

(1) Scratch resistance:

The surface of the coated plate is pressed and scratched with 10 en coin and degree of surface injure is observed. ◎ not injured ○ slightly injured Δ injured x coating peeled off

(2) Bending resistance:

A coated plate (5cm in width) is vised and bent at an angle of 180° in a constant temperature room maintained at 20°C. A scotch tape (Nichiban Cellotape, trade name, Nichiban K.K.) is applied on the bent surface and then peeled off. The surface conditions at the peeled-off portion are observed and evaluated by giving marks from 10 (no change) to 1 (thoroughly peeled off).

(3) Corrosion-resistance: salt spray test (JIS 2371-1955)

5% aqueous NaCl solution (35±1°C) is applied by spraying on the coated plate for 1,000 hours and width (mm) of blister at the cut portion is measured and corrosion-resistance is evaluated therefrom.
5 : no blister
4 : 0.5mm >
3 : 0.5~1.5mm
2 : 1.5~2.5mm
1 : 2.5mm <

Table 1

| Example | | | 5 | 6 | 7 |
|---|---|---|---|---|---|
| Composition | Emulsion of Polymer particles (A) | EM No. | 1 | 2 | 3 |
| | | average diameter (μ) | 0.2 | 0.55 | 0.2 |
| | | amounts (parts) in the concentrated composition | 20 | 20 | 20 |
| | | solid content in aq. treating composition (g/l) | 20.1 | 20.0 | 20.2 |
| | Acrylic polymer (B) contained in (A) | amounts (parts) in the concentrated composition | 13.8 | 13.8 | 13.9 |
| | | solid content in aq. treating composition (g/l) | 4.6 | 4.6 | 4.6 |
| | water-soluble chromium compound (C) | $CrO_3$ (%) | 17 | 17 | 17 |
| | | reduction % | 35 | 35 | 35 |
| | | amounts (parts) in the concentrated composition | 40 | 40 | 40 |
| | | solid content in aq. treating composition (g/l) | 22.7 | 22.7 | 22.7 |
| | hard micro-particles | material | titanium dioxide | titanium dioxide | titanium dioxide |
| | | average diameter (μ) | 0.5 | 0.5 | 0.5 |
| | | amounts (parts) in the concentrated composition | 20 | 20 | 20 |
| | | solid content in aq. treating composition (g/l) | 66.7 | 66.7 | 66.7 |
| | deionized water (parts) in the concentrated composition | | 20 | 20 | 20 |
| | pH of aq. treating composition | | 2 | 2 | 2 |
| treatment | | Cr coating weight $mg/m^2$ | 100 | 100 | 100 |
| Test results | | scratch resistance | ◎ | ◎ | ◎ |
| | | bending resistance 20°C OTT | 8 | 9 | 9 |
| | | corrosion resistance | 5 | 5 | 5 |

Table 1 (continued)

| | | | | |
|---|---|---|---|---|
| Example | | | 8 | 9 |
| Composition | Emulsion of Polymer particles (A) | EM No. | 2 | 2 |
| | | average diameter (μ) | 0.55 | 0.55 |
| | | amounts (parts) in the concentrated composition | 10 | 20 |
| | | solid content in aq. treating composition (g/l) | 10.0 | 20.0 |
| | Acrylic polymer (B) contained in (A) | amounts (parts) in the concentrated composition | 6.9 | 13.8 |
| | | solid content in aq. treating composition (g/l) | 2.3 | 4.6 |
| | water-soluble chromium compound (C) | $CrO_3$ (%) | 17 | 17 |
| | | reduction % | 35 | 35 |
| | | amounts (parts) in the concentrated composition | 60 | 40 |
| | | solid content in aq. treating composition (g/l) | 34.0 | 22.7 |
| | hard micro-particles | material | aluminium oxide | iron oxide |
| | | average diameter (μ) | 0.2 | 0.3 |
| | | amounts (parts) in the concentrated composition | 20 | 20 |
| | | solid content in aq. treating composition (g/l) | 66.7 | 66.7 |
| | deionized water (parts) in the concentrated composition | | 10 | 20 |
| | pH of aq. treating composition | | 2 | 2 |
| treatment | | Cr coating weight $mg/m^2$ | 150 | 100 |
| Test results | | scratch resistance | ◎ | ◎ |
| | | bending resistance 20°C OTT | 9 | 9 |
| | | corrosion resistance | 5 | 5 |

Table 1 (continued)

| | | | | | |
|---|---|---|---|---|---|
| Comparative Example | | | 1 | 2 | 3 |
| Composition | Emulsion of Polymer particles (A) | EM No. | 2 | 2 | 2 |
| | | average diameter (μ) | 0.55 | 0.55 | 0.55 |
| | | amounts (parts) in the concentrated composition | 15 | 20 | 20 |
| | | solid content in aq. treating composition (g/l) | 4.5 | 20.0 | 20.0 |
| | Acrylic polymer (B) contained in (A) | amounts (parts) in the concentrated composition | 10.4 | 13.8 | 13.8 |
| | | solid content in aq. treating composition (g/l) | 1.0 | 4.6 | 4.6 |
| | water-soluble chromium compound (C) | $CrO_3$ (%) | 17 | 17 | 17 |
| | | reduction % | 35 | 35 | 0 |
| | | amounts (parts) in the concentrated composition | 45 | 40 | 40 |
| | | solid content in aq. treating composition (g/l) | 7.7 | 22.7 | 22.7 |
| | hard micro-particles | material | silicic anhydride | natural silica | titanium dioxide |
| | | average diameter (μ) | 0.01 | 1.5 | 0.5 |
| | | amounts (parts) in the concentrated composition | 5 | 20 | 20 |
| | | solid content in aq. treating composition (g/l) | 5.0 | 66.7 | 66.7 |
| | deionized water (parts) in the concentrated composition | | 35 | 20 | 20 |
| | pH of aq. treating composition | | 2 | 2 | 1 |
| treatment | | Cr coating weight $mg/m^2$ | 30 | 100 | 100 |
| Test results | | scratch resistance | △ | ◎ | ○ |
| | | bending resistance 20°C OTT | 9 | 6 | 4 |
| | | corrosion resistance | 5 | 5 | 1 |

Table 1 (continued)

| Comparative Example | | | 4 | 5 |
|---|---|---|---|---|
| Composition | Emulsion of Polymer particles (A) | EM No. | 4 | zinc phosphating treatment |
| | | average diameter (μ) | 0.55 | |
| | | amounts (parts) in the concentrated composition | 13 | |
| | | solid content in aq. treating composition (g/l) | 20.1 | |
| | Acrylic polymer (B) contained in (A) | amounts (parts) in the concentrated composition | 0 | |
| | | solid content in aq. treating composition (g/l) | 0 | |
| | water-soluble chromium compound (C) | $CrO_3$ (%) | 17 | |
| | | reduction % | 35 | |
| | | amounts (parts) in the concentrated composition | 40 | |
| | | solid content in aq. treating composition (g/l) | 22.7 | |
| | hard micro-particles | material | titanium dioxide | |
| | | average diameter (μ) | 0.5 | |
| | | amounts (parts) in the concentrated composition | 20 | |
| | | solid content in aq. treating composition (g/l) | 66.7 | |
| | deionized water (parts) in the concentrated composition | | 27 | |
| | pH of aq. treating composition | | 2 | |
| treatment | | Cr coating weight $mg/m^2$ | 100 | $1.5 g/m^2$ |
| Test results | | scratch resistance | X | O |
| | | bending resistance 20°C OTT | 4 | 7 |
| | | corrosion resistance | 1 | 4 |

## Claims

1. A coating type chromate conversion coating composit:on comprising as essential components,

(A) from 5 to 500g/l as solid of an aqueous emulsion of crosslinked polymer particles or particles of polymer having a glasstransition point of 15° to 110° C whose average diameter is 0.1 to 3μm, prepared by an emulsion polymerization of at least one α,β-ethylenically unsaturated monomer in the presence of at least one protective colloid selected from the group consisting of

(i) a polyacrylic acid having a number average molecular weight of 5,000 to 300,000,

(ii) an acrylic copolymer of acrylic acid and at least one other monomer selected from methacrylic acid, acrylamides, methacrylamides, and hydrophilic monomer represented by the formula:

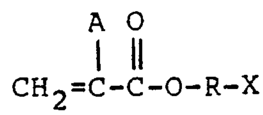

(in which A is hydrogen atom or methyl group; R is substituted or unsubstituted $C_2$~$C_4$ alkylene; X is a functional group bearing at least one of oxygen, phosphor and sulfur atoms), number average molecular weight of said copolymer being 5,000~ 300,000, and

(iii) an oligomer derived from at least one α,β-ethylenically unsaturated monomer, which bears hydrophilic groups and have a number average molecular weight of 500~10,000, the weight ratio of said α,β-ethylenically unsaturated monomer used in the emulsion polymerization to said protective colloid being 100:5~100 as solid,

(B) from 2 to 250g/l as solid of a polyacrylic acid having a number average molecular weight of 5,000 to 300,000 and/or an acrylic copolymer of acrylic acid and at least one other monomer selected from methacrylic acid, acrylamides, methacrylamides and hydrophilic monomer represented by the formula:

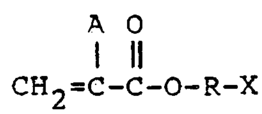

in which A, R and X are as defined above, having a number average molecular weight of 5,000 to 300,000, inclusive of the amount of polyacrylic acid and/or acrylic copolymer used as protective colloid in the preparation of said polymer particles, if any,

(C) from 5 to 500g/l as Cr of a water soluble chromium compound, 30 to 50 wt% of the total chromium contained being trivalent chromium, and

(D) from 5 to 1,000g/l of metal oxide microparticles having an average diameter of 0.1 to 20μm, selected from the group consisting of MnO, $TiO_2$, $Fe_2O_3$, $Fe_3O_4$, $Cr_2O_3$, $Al_2O_3$, ZnO, $PbO_2$ and Cuo, the solid weight ratio of said polymer particles emulsion (A) to water soluble chromium compound (C) being 10:1 to 1:5, the weight ratio of said metal oxide microparticles (D) to water soluble chromium compound (C) being 5:1 to 1:10 and pH of the composition being 1~3.

2. A composition according to claim 1 wherein the aqueous emulsion of polymer particles is an emulsion containing crosslinked acrylic resin particles having an average diameter of 0.1 to 3μm, prepared by using, as a part of α,β-ethylenically unsaturated monomers, a monomer having in its molecule at least 2 radically polymerizable ethylenic unsaturation bonds.

3. A composition according to claim 1 wherein the aqueous emulsion of polymer particles is an emulsion containing acrylic resin particles having an average diameter of 0.1 to 3μm, glasstransition point of said acrylic resin being 15 to 110° C.